# EUROPEAN PATENT SPECIFICATION

(11) **EP 2 721 859 B1**
(45) Date of publication and mention of the grant of the patent: **15.05.2019**
(21) Application number: 11867603.0
(22) Date of filing: 15.06.2011
(51) Int. Cl.: H04W 48/18, H04W 4/70, H04W 4/38

(54) **HANDLING OF OPERATOR CONNECTION OFFERS IN A COMMUNICATION NETWORK**
HANDHABUNG VON BETREIBERVERBINDUNGSANGEBOTEN IN EINEM KOMMUNIKATIONSNETZ
TRAITEMENT D'OFFRES DE CONNEXION D'OPÉRATEURS DANS UN RÉSEAU DE TÉLÉCOMMUNICATION

(43) Date of publication of application: 23.04.2014
(73) Proprietor: Telefonaktiebolaget LM Ericsson (publ), 164 83 Stockholm (SE)
(72) Inventor: TSIATSIS, Vlasios, SE-171 60 Solna (SE); FASBENDER, Andreas, 52074 Aachen (DE); HJELM, Johan, Tokyo 165-0025 (JP)
(74) Representative: Zacco Sweden AB
(86) International application number: PCT/SE2011/000114
(87) International publication number: WO 2012/173528

(56) References cited:
- WO-A1-2008/136713
- WO-A1-2011/029308
- WO-A1-2011/035572
- WO-A1-2011/066409
- WO-A2-2008/045797
- WO-A2-2009/092115
- WO-A2-2009/103623
- WO-A2-2010/102236
- US-A1- 2005 079 863
- US-A1- 2009 055 904
- US-A1- 2009 093 247
- US-A1- 2010 048 205
- "3rd Generation Partnership Project; Technical Specification Group Services and System Aspects; Feasibility study on the security aspects of remote provisioning and change of subscription for Machine to Machine (M2M) equipment (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 22 June 2010 (2010-06-22), pages 1-87, XP050441986, [retrieved on 2010-06-22]

## Description

### TECHNICAL FIELD

The present invention relates to operator connection offers for a Machine to Machine equipment in a communication network. More particularly, the invention relates to a method in a network node, a network node, a computer program and a computer program product for providing operator connection offers to a Machine to Machine equipment, as well as to a method in a Machine to Machine equipment, a Machine to Machine equipment, a computer program and a computer program product for selecting an operator connection offer.

### BACKGROUND

The technology of a standardized Machine to Machine Equipment (M2ME) supports wired or wireless communication between devices, and wireless M2ME communication is applicable to all wireless network technologies such as Global System for Mobile Communications (GSM), General Packet Radio Service (GPRS), Universal Mobile Telecommunications System (UMTS) and Long Term evolution (LTE) . Examples of the use of M2ME communication include sensor networks (for example, networks for monitoring weather conditions), surveillance equipment (for example alarm systems or video monitoring), vehicle fleet management, vending machines, and monitoring manufacturing.

It is predicted that in the long term future, there may be billions of M2ME, and that the number of M2ME could exceed the number of mobile telephones and personal computers.

An M2ME is typically provided with a cellular subscription (which uses a SIM card as security token), and uses the Internet Protocol (IP) for communicating with other devices, allowing for example utility companies to automatically read utility meters, which eliminates the need for personnel to visit customer premises and manually read the meters. M2M communications may also be used e.g. for alarm reporting and remote control applications.

An M2ME may also be provided with a downloadable SIM or a Machine Communication Identity Module (MCIM), as defined in the 3GPP (Third Generation Partnership Project)

The MCIM or downloadable SIM is conventionally used to establish the credentials of users and terminals (e.g. M2MEs). The process of connecting using the MCIM and its management is described in the 3GPP document TR 33.812. This document describes how an M2ME can attach to a cellular network using a standard 3GPP radio technology, receive an initial credential or authentication message, and be granted an authorization for a limited set of operations by the provider of the network to which the terminal is connected, i.e. by the Visited Network Operator (VNO). According to the TR 33.812, the M2ME then uses this limited authorization, i.e. a permission to only access a Registration Operator (RO) to trigger the authentication and authorization of the connection to the Selected Home Operator (SHO), who is a provider of shared secrets, authorization certificates, and services which are attached to the subscription of the user of the terminal. When granted authorisation to do so by the Selected Home Operator (SHO), these shared secrets, authorisation certificates, etc. are downloaded into a secure area of the M2ME, so that the shared secret and authentication certificates can be used to authenticate and authorise the M2ME in the network to which it has attached.

Document TR 33.812 describes mechanisms by which a previously established credential is used to authorize the establishment of a connection through a Visited Network Operator (VNO) and a Selected Home Operator (SHO) of the M2ME. However, this is not applicable in a scenario where a M2ME may wish to associate with one of several available home operators.

Related art is described e.g. in EP 2 448 298, which describes changing the operator (SHO) of a Machine to Machine equipment to a selected visited network operator, and in WO 2008/045797, which describes a system for enabling a dynamic selection of network operator using an operator server (MVNO server) storing mobile network operator data to be requested by a mobile device, wherein the mobile device can receive network operator data for a selection of a more suitable network operator.

US 2009/093247 A1 is directed to provide network connection information to a wireless device. The wireless device sends a request to for an identification of one or more approved data network operators. and receives, as response, one or more approved data network operators.

US 2010/048204 A1 describes a selection of a wireless network from a plurality of wireless networks for a wireless device, based on whether or not the wireless network is able to provide a service requested by the wireless device, wherein the decision is taken either by the wireless device itself or by a network node. Other parameters that may be used for selecting is e.g. the QoS provided by the wireless networks, roaming agreements or the cost of the service.

It is thus desirable to provide a mechanism for the M2ME to select one of several available home operators.

### SUMMARY

It is an object of the embodiments described hereinafter to address at least some of the issues outlined above, and this object and others are achieved by the method and the arrangement according to the appended independent claims, and by the embodiments according to the dependent claims.

According to a first exemplary aspect, there is provided a method in a network node of a communication network for sending operator connection offers to a Machine to Machine equipment connectable to the communication network. The method comprises receiving a connection request from a Machine to Machine equipment and obtaining at least one operator connection offer for the Machine to Machine equipment, each offer originating from a separate operator. The method further comprises selecting one or more of the at least one operator connection offer and sending the selected one or more of the at least one operator connection offer to a decision entity associated with the Machine to Machine equipment, for selecting one of the at least one operator connection offer.

Optionally, the obtaining step comprises obtaining the at least one operator connection offer for the Machine to Machine equipment from at least one of a registration node, at least one operator or from a storage unit associated with the network node. As an option, the step of selection comprises selecting one or more of the at least one operator connection offer, based on context information included in the received connection request or on context information obtained from a context manager in the communication network.

As an option, the step of selection comprises selecting one or more of the at least one operator connection offer based on one or more subscription rules obtained from a subscription database. As an option, the decision entity is one of an entity included in the Machine to Machine equipment or an entity in the communication network.

According to a second exemplary aspect, there is provided a network node connectable to a communication network, and arranged to send operator connection offers to a Machine to Machine equipment connectable to the communication network. The network node comprising a receiver circuitry configured to receive a connection request from a Machine to Machine equipment and a processor circuitry configured to obtain at least one operator connection offer for the Machine to Machine equipment wherein each offer is originating from a separate operator. The processor circuitry is further configured to select one or more of the at least one operator connection offer. A sender circuitry is also configured to send the selected one or more of the at least one operator connection offer to a decision entity associated with the Machine to Machine equipment (10).

Optionally, the processing circuitry in the network node is further configured to obtain the at least one operator connection offer for the Machine to Machine equipment from at least one of a registration node, at least one operator or from a storage unit associated with the network node, using the receiver circuitry. As an option, the processing circuitry in the network node is further configured to obtain the at least one operator connection offer as a service level agreement, each service level agreement including at least one of the parameters pricing, subscription lifetime, bandwidth constraints, connection quality, Location coordinates, Service availability, Service reliability, Security requirements and considerations and threshold values.

As an option, the processing circuitry in the network node is configured to select one or more of the at least one operator connection offer, based on context information included in the received connection request or on context information obtained from a context manager in the communication network.

As an option, the processing circuitry in the network node is further configured to select one or more of the at least one operator connection offer based on one or more subscription rules obtained from a subscription database.

### BRIEF DESCRIPTION OF THE DRAWINGS

Exemplary embodiments of the invention will now be described in more detail, and with reference to the accompanying drawings, in which:
Figure 1 schematically illustrates a first exemplary signalling diagram for providing operator connection offers to the M2ME wherein an end user chooses an operator connection offer to use.
Figure 2 schematically illustrate a second exemplary signalling diagram for providing operator connection offers to the M2ME. A decision function in the M2ME decides on behalf of the end user the operator connection offer to use.
Figure 3 schematically illustrate a third exemplary signalling diagram for providing operator connection offers to the M2ME. A decision function in the communication network decides on behalf of the end user the connection operator connection offer to use.
Figure 4 is a flow diagram illustrating first exemplary embodiment of a method in a network node for sending operator connection offers to the M2ME.
Figure 5 is a flow diagram illustrating a first exemplary embodiment of a method in the M2ME for receiving operator connection offers from the network node.
Figure 6a is a schematic diagram showing some components of a network node.
Figure 6b is a schematic diagram showing functional modules of the network node of figure 6a.
Figure 7a is a schematic diagram showing some components of a Machine to Machine equipment.
Figure 7b is a schematic diagram showing functional modules of the Machine to Machine equipment of figure 7a.
Fig 8 shows one exemplary computer program product comprising computer readable means for performing a method in a network node and a method in a Machine to Machine equipment.

### DETAILED DESCRIPTION

In the following description, the invention will be described in more detail with reference to certain embodiments and to accompanying drawings. For purposes of explanation and not limitation, specific details are set forth, such as particular scenarios, techniques, etc., in order to provide a thorough understanding of the present invention. However, it is apparent to one skilled in the art that the present invention may be practiced in other embodiments that depart from these specific details.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

It is a concept of exemplary embodiments described herein to provide a mechanism for the M2ME to select one of several home operators. There is a need to enhance the techniques described in document 3GPP TR 33.812, and especially the process of selecting a home operator.

As previously mentioned in the Background section, the document 3GPP TR 33.812 describes a mechanism by which a previously established credential can be used to authorize the establishment of a connection through a visited network operator (VNO) with the home operator (SHO) of the subscriber. However, in the TR 33.812 it is implicitly assumed that only one operator is available. This is not applicable in a scenario where a terminal, e.g. an M2ME, may wish to associate with only one of several available operators, and eventually attempt to authenticate itself with one of them. In such circumstances, the selection of one SHO (Selected Home Operator) of the several available home operators could become problematic.

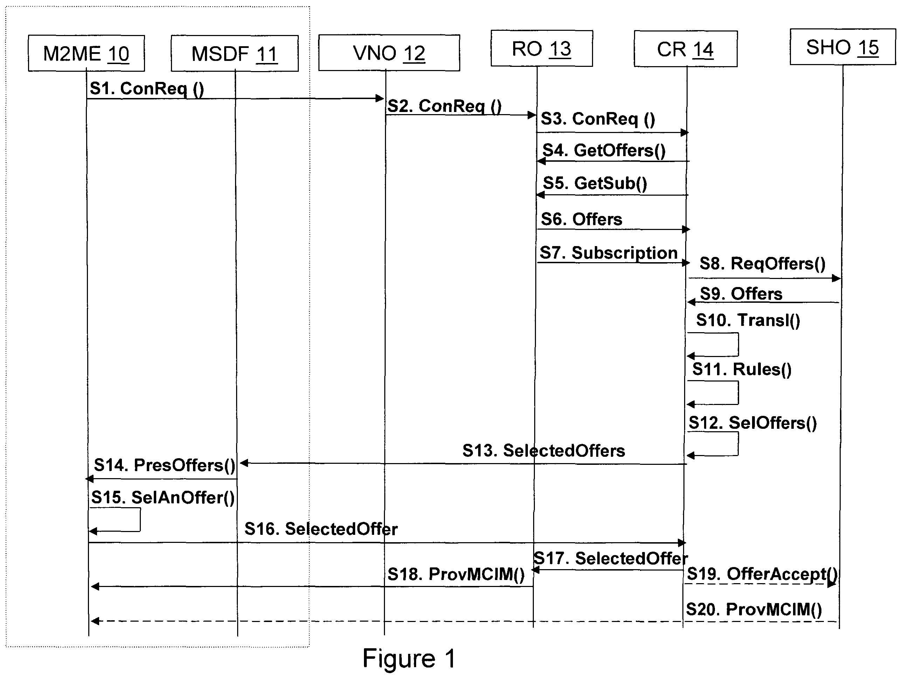

One area that could involve a selection of an SHO is so-called smart metering, where the network availability is one of the main issues when connecting meters e.g. in a basement of a building. Notable is also that while physical coverage of the radio signal may be available, availability in practice may vary with network load and other parameters. In such case it would be beneficial for the "smart meter", e.g. an M2ME, to obtain a list from the network of the operators with the best coverage in this building. Figure 1 schematically illustrates an exemplary signaling diagram for providing operator connection offers to an M2ME wherein an end user chooses via e.g. a graphical user interface an operator connection offer to use.

In this signaling diagram a M2ME 10, a M2ME subscription decision function (MSDF) 11, a visited network operator (VNO) 12, a registration operator (RO) 13, a connection recommender (CR) 14 and one or more selected home operators (SHO) 15 are shown. According to the signaling diagram, the following steps occur:
Signal S1: Initially, and in order for the non provisioned M2ME 10 to receive connection offers, the non provisioned M2ME 10 attaches to a communication network and sends in S1 a connection request to the VNO 12.

The connection request may comprise context information for the M2ME 10 such as location information which can be derived from the sensors attached to the M2ME 10.

To communicate with the VNO 12, the M2ME 10 conventionally attaches to an initial connectivity function node (ICF) (not shown) that provides IP connectivity to the M2ME 10.

Signal S2: The VNO 12 conventionally receives the connection request and forwards this request to the RO 13 in S2.

Signal S3: The RO 13 receives the connection request and forwards this request to a network node e.g. the CR 14 in the communication network in S3. The CR 14 is a node with the ability to provide connection offers to the M2ME 10.

Before sending the connection request to the CR 14, the RO 13 fetches the information comprised in the connection request to find out if any context information for the M2ME is included. If no such information is included, the RO 13 contacts a suitable node in the communication network, e.g. a context manager node (not shown), to derive the location information for the M2ME 10. The context manager collects this information for instance by requesting the location from a location server, using e.g. the identity of the M2ME as a parameter. The RO 13 then adds the location information to the connection request before forwarding it to the CR 14.

Once the CR 14 receives the connection request from the RO 13, the CR 14 starts to collect relevant information about the M2ME, as illustrated in the consecutive signals S4 - S9, such as subscription information for the M2ME, e.g. rules set by the M2ME or the end user, or offers already stored in the RO 13. The CR 14 collects such information in order to determine which connection offers are most suitable for addressing the M2ME or the end user requirements.

The CR 14 is able to obtain several connection offers that originate from several operators, e.g. SHOs 15. The offers can be pushed to the CR 14 or to the RO 13, e.g. the SHOs 15 register with their most recent offer by sending the offer to the RO 13 or directly to the CR 14. The offers may also be pulled, which means that the CR 14 or the RO 13 interrogates the SHOs 15 for offers. Alternatively, offers are pulled at a scheduled time, e.g. the CR 14 or the RO 13 interrogates the SHOs 15 for offers according to a defined scheduled time.

Signal S4: In signal S4, the CR 14 sends a request for connection offers to the RO 13, e.g. a request for connection offers that have been pushed from the SHOs 15 to the RO 13.

The CR 14 can also obtain offers stored in its own storage unit (not shown), e.g. offers that have been pushed from the SHOs 15 directly to the CR 14.

Signal S5: The CR 14 may also collect subscription information for the M2ME by sending a subscription information request to the RO 13, in S5.

The subscription information comprises requirements or rules set by the M2ME or the end user. For instance, the subscription information may comprise requirements for e.g. operators offering data connections only or requirements for accepting all connection offers from all operators except a specific operator or requiring the cheapest connection offer during day time or the one having best coverage, etc.

The subscription information is either stored in the RO 13 or in an external data base, e.g. a subscription data base in the communication network (not shown). If the subscription information is stored in an external data base, the CR 14 sends the subscription request directly to that data base. Alternatively the CR 14 sends the subscription request to the RO 13 and the RO 13 forwards the request to the external data base.

Signal S6: In S6, the RO 13 will reply to the connection offer request sent by the CR 14 in S4. The RO 13 will provide the CR 14 with all connection offers that has been pushed by the SHOs 15 to the RO 13.

Signal S7: In S7, The RO 13 replies to the subscription information request sent by the CR 14 in S4. As mentioned above the subscription information contains requirements and/or rules set by the M2ME or by the end users. Such requirements and rules are used by the CR 14 for determining the most suitable offers for the M2ME.

As have been mentioned before, the connection offers can be pushed by the SHOs directly to the CR 14. In such case the CR 14 does not issue a request for connection offers to the RO 13 since the CR 14 has already received pushed connection offers from the SHOs 15. Alternatively, the CR 14 may be configured to compare its own stored connection offers with the connection offers stored in the RO 13 and therefore issues a request for connection offers to the RO 13. After comparing the connection offers, the CR 14 may select the most updated connection offers.

Signal S8: In S8, the CR 14 issues a request to the SHOs 15 for connection offers. The CR 14 may include the initial context information provided by the M2ME or by the context manager.

There are several reasons for the CR 14 to send a request for connection offers to the SHOs 14. It could be that neither the CR 14 nor the RO 13 has any pushed offers stored, thus the CR 14 issues a request to the SHOs 15 for obtaining connection offers. Alternatively the CR 14 may have received pushed offers from some of the SHOs 15 and therefore need to issue a request to the other SHOs 15 to obtain connection offers from them, as well. Alternatively, the CR 14 checks for updates to the pushed connection offers. The SHO 15 may therefore send only the updated connection offers, if there are any, thus network resources are saved.

The connection offers are provided to the CR 14 in terms of Service Level Agreements (SLA) including parameters such as pricing, subscription lifetime, bandwidth constraints, connection quality and location coordinates.

Signal S9: In response to the offer connection request issued by the CR 14 towards the SHOs 15, in S8, each SHO 15 responds with one or more of their most recent connection offer, in S9. Consequently, each SHO competes for the subscriber by sending the connection offers to the CR 14.

The SHOs customize the connection offers according to the context information sent by the CR 14 to the SHOs 15 in S8.

The CR 14 obtains the connection offers and determines which connection offers are the most suitable for addressing the M2ME or the end user requirements.

Signal S10: Signal S10 is part of the determination process performed by the CR 14 for finding the most suitable connection offers. In this process, the CR 14 applies a semantic translation for translating the connection offers into a common language, such as e.g. the Web Ontology Language (OWL) or the SIMS telecom ontology. Preferably, the translation step is performed by a semantic translation engine (not shown) in the CR 14.

Thus, according to an exemplary embodiment, the connection offers are translated into a common format for making it easier for the CR 14 when processing the connection offers.

Signal S11: Once the connection offers are translated into a common format, the CR 14, in signal S11 passes the offers to a rule engine (not shown) which acts on the subscription information and/or the context information delivered to the CR 14 in e.g. step S3 and S7.

For instance, by acting on the subscription information and/or the context information, the rule engine filters and selects the cheapest connection offers having the best coverage for the M2ME.

As mentioned above, the subscription information contains rules set by e.g. an end user, a business entity or the like and the rule engine adapts to these rules when selecting the most suitable connection offers. The rule engine may also adapt to the context information received from the M2ME or from the context manager.

Signal S12: When the most suitable connection offers are selected, the rule engine creates an offer token for each connection offer. The offer tokens are then moved to an offer token queue. The offer token queue is ordered in order of the most favorable token, i.e. the most favorable connection offer.

Which offer token, i.e. connection offer that is most favorable depends on the parameters used in the computation and the parameters used in the comparison of the offer tokens.

These parameters can be set by the CR 14 based on parameters which do not apply to the end user or to the subscription information, e.g. how much kickback the CR 14 will receive from the SHO 15 for brokering the connection.

Signal S13: The selected connection offers are then send to the M2ME subscription decision function (MSDF) 11, which is a function residing in the M2ME 10. The dotted line surrounding the M2ME and the MSDF is intended to show that the MSDF is a function in the M2ME.

Signal S14: The MSDF 11 then presents the selected connection offers to the end user, via e.g. a graphical user interface.

Signal S15: The end user in S15 chooses the best connection offer among all presented connection offers.

Signal S16: The M2ME 10 then sends a confirmation back to the CR 14 including the selected connection offer.

Signal S17: The CR 14 informs the RO 13 about the selected offer.

Signal S18: The RO 13 then provisions the MCIM to the M2ME according to what is described in the 3GPP TR 33.812 document.

The signals S17 and S18 are performed if the RO 13 is delegated to provision MCIMs on behalf of the SHOs 15.

If there is no delegation made to the RO 13, the signals S17 and S18 are omitted, and S19 and S20 are performed instead. In figure 1 the signals S19 and S20 are drawn with dashed arrows as they are performed only in the non-delegation scenario.

Signal S19: As described above, in a non-delegation scenario, the CR 14 in S19 informs the selected SHO that the provided connection offer has been accepted.

Signal S20: The Selected SHO then provisions the MCIM to the M2ME according to the 3GPP TR 33.812 document.

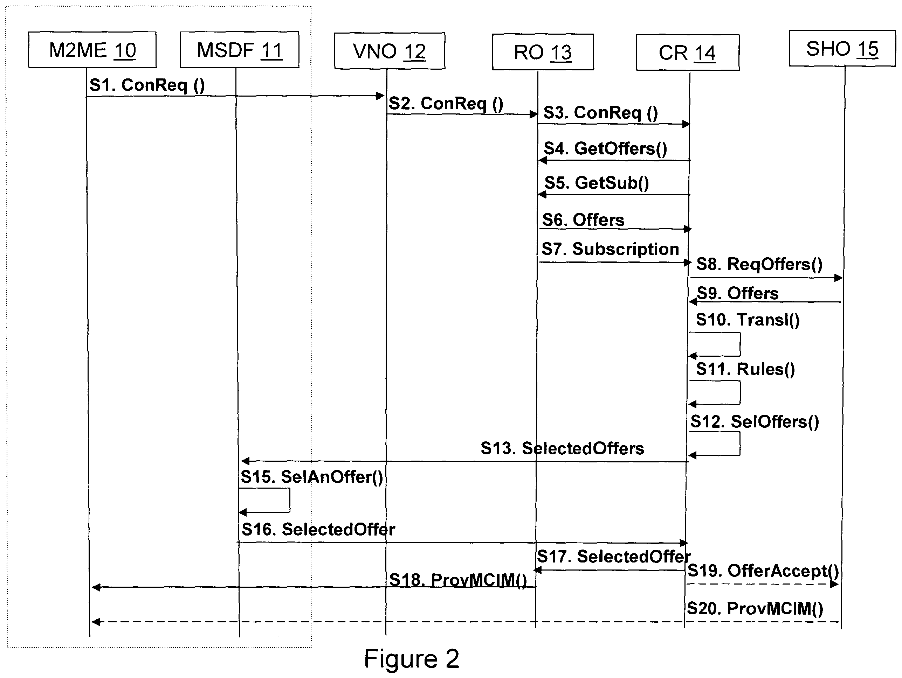

Figure 2 schematically illustrates a second exemplary signaling diagram for providing operator connection offers to the M2ME. This scenario describes the M2ME in an unattended mode such that a decision function, i.e. the MSDF 11 in the M2ME 10, decides on behalf of the end user the connection offer to use.

In figure 2, the signals S1- S12 and the signals S17-S20 correspond to the same signals in figure 1 and will therefore not be described again below. Furthermore, signal S14 in figure 2 is omitted since no presentation of the connection offers are presented to the end user. The reason is that the M2ME 10 in figure 2 is unattended.

Signal S13: Once the CR 14 has selected the most suitable connection offers, the CR 14 sends these connection offers to the MSDF 11 in the M2ME 10.

The MSDF 11 is a decision function associated with the M2ME and is used for selecting the most suitable connection offer in case the M2ME is unattended. The MSDF 11 stores policies and accounting data and use such information when making a decision on which connection offer to choose among all connection offers as well as re-provisioning the M2ME.

The MSDF 11 may use the stored policies to find out when to re-provision the M2ME.

For instance, the MSDF 11 selects a connection offer during day time and another connection offer during evening. Thus, the MSDF 11 may request provisioning of a MCIM from one SHO 15 during day time and provisioning of another MCIM from another SHO 15 during night time.

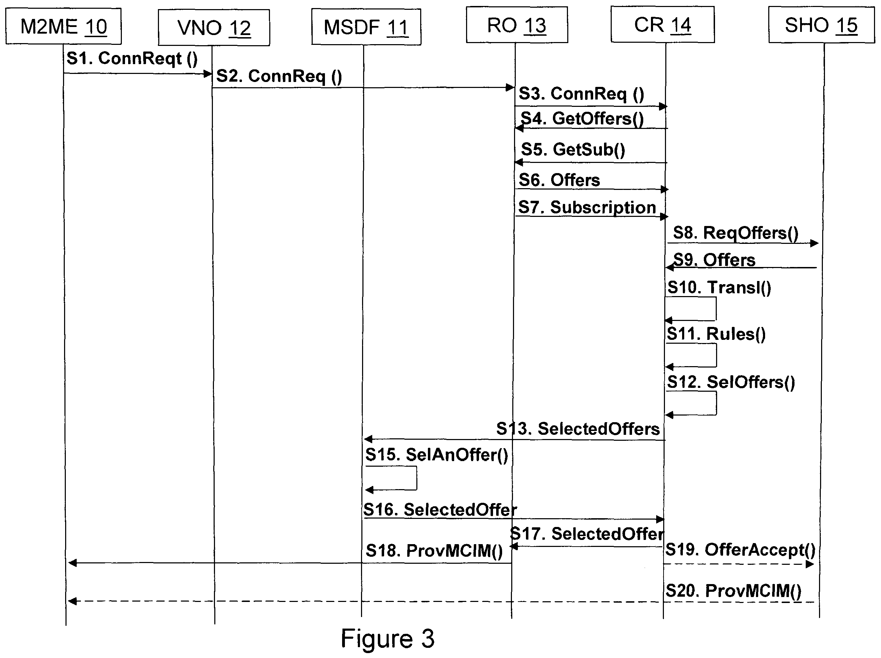

In this scenario and according to figure 2, the MSDF 11 functionality resides in the M2ME. However, the MSDF functionality may also be implemented in a different node in the communication network as described later according to figure 3.

Signal S15: The MSDF 11 receives the connection offers from the CR 14 and applies the stored rules, e.g. the stored policies, for making a decision on behalf of the end user on which connection offer to use among all received connection offers.

Signal S16: The MSDF 11 then sends a confirmation back to the CR 14 including the selected offer.

The corresponding MCIM is then provisioned to the M2ME according to signals S17 and S18 or signals S19 and S20 in figure 2. These signals correspond to the same signals in figure 1 and are therefore not described again.

Figure 3 schematically illustrates a third exemplary signaling diagram for providing operator connection offers to the M2ME wherein the MSDF chooses a connection offer to use on behalf of the end user. In this scenario, the MSDF 11 is located as a separate node in the communication network or as a function implemented in the CR 14.

In figure 3, signals S1- S12 and signals S17-S20 correspond to the same signals as in figure 1 as well as in figure 2 and will therefore not be described again below. Furthermore and as in figure 2, the signal S14 is omitted in figure 3 since the MSDF 11 makes a decision for connection offer on behalf of the end user.

Signal S13: Once the CR 14 has selected the most suitable connection offers, the CR 14 sends these connection offers to a decision node, namely the MSDF 11 located in the communication network.

Alternatively, the MSDF 11 is delegated to the CR 14 and implemented as a decision function in the CR 14. The CR 14 may therefore when applying the decision rules in S11, use the decision function to select the best connection offer. In such case the CR 14 requests provisioning of the MCIM directly to the M2ME, e.g. by omitting signals S13-S17.

Signal S15: The MSDF 11 in the communication network receives the most suitable connection offers and applies the stored rules e.g. the stored policies to make a decision on which connection offer to select on behalf of the M2ME.

The use of MCIM in the embodiments is exemplary only and should not be seen as a limited. While this document discusses the exemplary embodiments in terms of MCIM, equivalent processes can be performed with other mechanisms, such as downloadable SIM.

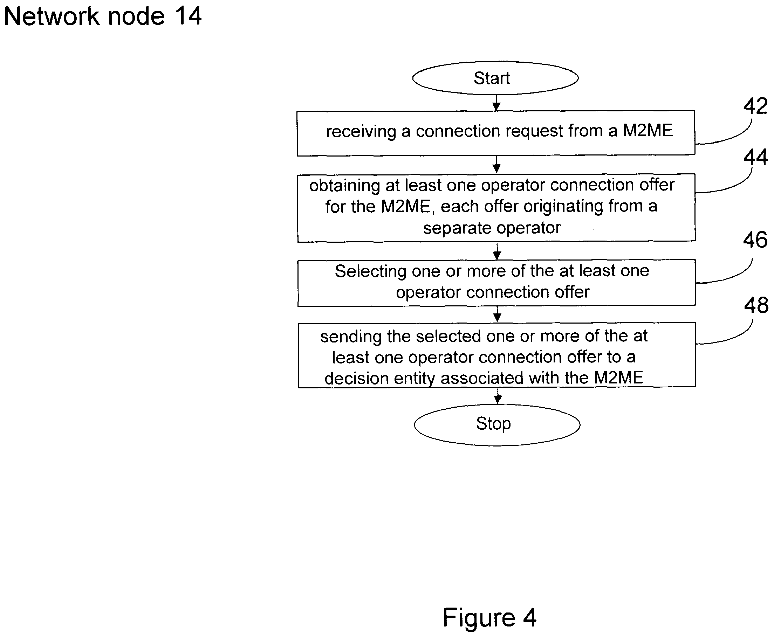

Figure 4 is a flow diagram illustrating a first exemplary embodiment of a method in a network node, e.g. the CR 14 for sending operator connection offers to a M2ME connected to the communication network.

In step 42, the network node 14 receives a connection offer request from the M2ME 10. This request is sent by the M2ME 10 as an initial provisioning step or as a re-provision step if the M2ME 10 is to be re-provisioned.

In step 44, the network node obtains at least one operator connection offer for the M2ME 10 wherein each offer is originated from a separate operator, e.g. a separate SHO 15. The term operator can be interpreted as a provider of network connectivity.

According to another embodiment, the network node 14 also obtains the at least one operator connection offer from its own storage unit or from a registration node, i.e. the RO 13.

In step 46, the network node 14 selects one or more of the at least one operator connection offer.

The selection may be performed by a rule engine which acts on subscription information and/or context information related to the M2ME.

In step 48, the network node sends the selected one or more of the at least one operator connection offer to a decision entity associated with the M2ME.

The decision entity may be a function implemented in the network node itself, in the M2ME 10 or in a separate node in the communication network. The decision of which of the at least one operator connection operator to choose is either made by an end user or automatically by the decision entity 11.

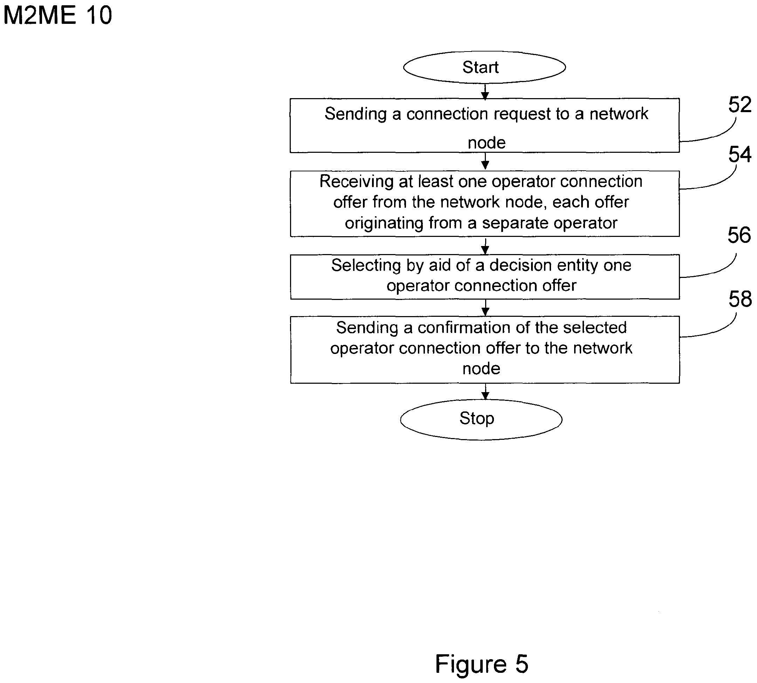

Figure 5 is a flow diagram illustrating a first exemplary embodiment of a method in a M2ME 10, for receiving operator connection offers from a network node, e.g. the CR 14.

In step 52, the M2ME 10 sends a connection request to a network node 14. The request may include context information, e.g. location information for the M2ME 10. Such information is used by the network node in selecting the most suitable connection offers for the M2ME 10. For instance the network node may select connection offers having the best coverage based on the received context information.

In step 54, the M2ME 10 receives at least one operator connection offer from the network node, e.g. the CR 14, wherein each offer is originating from a separate operator.

In step 56, the M2ME 10 or the end user selects by the aid of a decision entity, e.g. the MSDF 11, one operator connection offer.

As mentioned above, and according to an exemplary embodiment, the at least one operator connection offer is presented to an end-user via a graphical user interface in the M2ME 10, such that the end-user could make the decision. According to another exemplary embodiment, the decision is made by the decision entity, wherein the M2ME 10 could be unattended.

In step 58, the M2ME 10 sends a confirmation of the selected operator connection offer to the network node.

Once the network node receives the confirmation, the M2ME 10 gets provisioned with the corresponding MCIM.

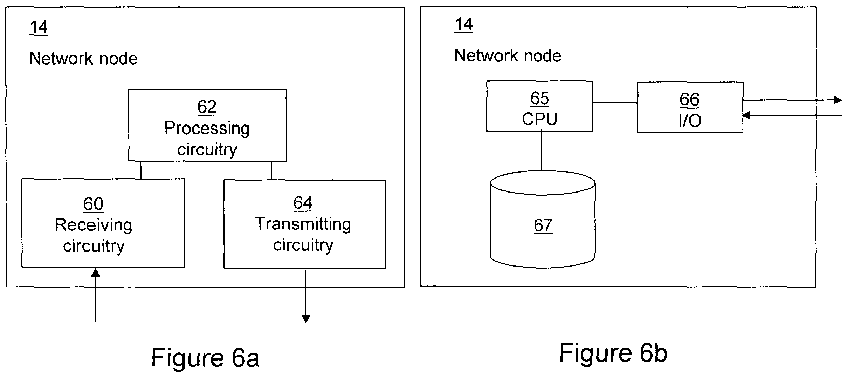

Figure 6a is a schematic diagram illustrating functional modules of the network node 14. The modules can be implemented using hardware and/or software such as computer program executing in the network node 14. All modules depend on an execution environment which utilizes the components shown in figure 6b. The modules correspond to the steps of the method illustrated in figure 4.

A receiving circuitry 60 is configured to receive a connection request from a M2ME.

A processing circuitry 62 is configured to obtain at least one operator connection offer for the M2ME 10. Each obtained offer is received by the receiving circuitry from a separate operator. The processor circuitry is also configured to select one or more of the at least one operator connection offer.

A transmitting circuitry 64 is configured to send the selected one or more of the at least one operator connection offer to a decision entity associated with the M2ME 10.

Figure 6b is a schematic diagram illustrating some components of the network node 14.

The network node 12 can be any suitable computer capable of performing the tasks as described herein. For example, the network node 12 can be a computer running an operating system such as Linux, Microsoft Windows, Apple Mac OS X, UNIX variants, etc.

A central processing unit (CPU) 65 is provided, capable of executing software instructions stored in a memory 67, the memory 67 can be any combination of read and write memory (RAM) and read only memory (ROM). The memory also comprises persistent storage, which, for example, can be any single one or combination of magnetic memory, optical memory, or solid state memory or even remotely mounted memory.

The network node 14 also comprises an I/O interface 66 for communicating with the SHOs 15, the RO 13 and the M2ME 10.

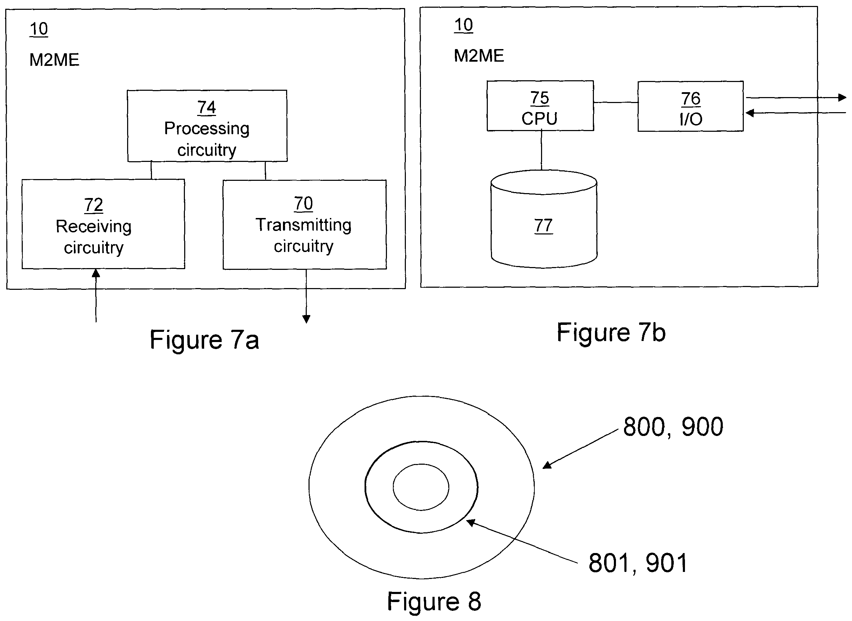

Figure 7a is a schematic diagram illustrating functional modules of the M2ME 10. The modules can be implemented using hardware and/or software such as computer program executing in the M2ME 10. All modules depend on an execution environment which utilizes the components shown in figure 7b. The modules correspond to the steps of the method illustrated in figure 5.

A transmitting circuitry 70 is configured to send a connection request to a network node 14.

A receiver circuitry 72 is configured to receive at least one operator connection offer from the network node 14. Each of the at least one operator connection offer is originating from a separate operator.

A processor circuitry 74 is configured to select by aid of a decision entity one operator connection offer from the at least one operator connection offer.

The transmitting circuitry 70 is further configured to send a confirmation of the selected operator connection offer to the network node 14.

Figure 7b is a schematic diagram illustrating some components of the M2ME 10.

The M2ME 10 can be any suitable computer capable of performing the tasks as described herein. For example, the M2ME 10 can be a computer running an operating system such as Linux, Microsoft Windows, Apple Mac OS X, UNIX variants, etc.

A central processing unit (CPU) 75 is provided, capable of executing software instructions stored in a memory 77. The memory 77 can be any combination of read and write memory (RAM) and read only memory (ROM). The memory also comprises persistent storage, which, for example, can be any single one or combination of magnetic memory, optical memory, or solid state memory or even remotely mounted memory.

The M2ME 10 also comprises an I/O interface 76 for communicating with the network node, the SHOs 15, the RO 13 and the CR 14.

Figure 8 shows one example of a computer program product 800, 900 comprising computer readable means. On this computer readable means a computer program 801, 901 can be stored, which computer program can cause a controller to execute a method according to embodiments described herein, e.g. in connection with the figures 4 and 5. In this example, the computer program product is an optical disc, such as a CD (compact disc) or a DVD (digital versatile disc) or a Blu-Ray disc. As explained above, the computer program product could also be embodied as a memory of a device, such as memory 67 of the network node 14 or memory 77 of the M2ME 10. While the computer program 801, 901 is here schematically shown as a track on the depicted optical disk, the computer program can be stored in any way which is suitable for the computer program product.

In the above described exemplary embodiments, it is assumed that the network node, e.g. the CR 14 is a separate node in the communication network with the ability to select the most suitable operator connection offers by acting on information related to the M2ME. However, according to an alternative embodiment, the network node, e.g. the CR 14 is implemented as a function in the RO 13.

It is an advantage with the embodiments to provide by the network node 14 at least one operator connection offer to the M2ME 10. The M2ME can then select one operator connection offer from the at least one operator connection offer. The selected operator becomes the home operator.

However, the above mentioned and described embodiments are only given as examples and should not be limiting to the present invention. Other solutions, uses, and functions within the scope of the invention as claimed in the accompanying patent claims should be apparent for the person skilled in the art.

## Claims

1. A method in a network node (14) of a communication network for sending operator connection offers to a Machine to Machine equipment (10) connectable to the communication network, the method comprises:
receiving (42) a connection request from a Machine to Machine equipment (10), wherein the connection request further comprises context information for the Machine to Machine equipment;
obtaining (44) at least one operator connection offer for the Machine to Machine equipment (10), each offer originating from a separate operator;
selecting (46) one or more of the at least one operator connection offer, based on subscription information and the received context information related to the Machine to Machine equipment, and
sending (48) the selected one or more of the at least one operator connection offer to a decision entity associated with the Machine to Machine equipment (10) for selection of one operator connection offer.

2. The method according to claim 1, wherein obtaining (44) comprises:
Obtaining (44) the at least one operator connection offer for the Machine to Machine equipment from at least one of a registration node, at least one operator or from a storage unit associated with the network node.

3. The method according to claim 2, wherein an operator connection offer is obtained directly or scheduled by means of pull or push from the registration node or from an operator.

4. The method according to claim 1-3, wherein obtaining (44) further comprises:
obtaining (44) the at least one operator connection offer as a service level agreement, each service level agreement including at least one of the parameters pricing, subscription lifetime, bandwidth constraints, connection quality, Location coordinates, Service availability, Service reliability, Security requirements and considerations, and threshold values.

5. The method according to any of claim 1-4, wherein obtaining (44) further comprises:
translating the at least one operator connection offer to a common format which can be processed by the network node.

6. The method according to any of the preceding claims, wherein the decision entity is one of an entity included in the Machine to Machine equipment or an entity in the communication network.

7. A network node (14) connectable to a communication network, and arranged to send operator connection offers to a Machine to Machine equipment (10) connectable to the communication network, the network node comprising:
a receiver circuitry (60) configured to receive a connection request from a Machine to Machine equipment (10), wherein the connection request further comprises context information for the Machine to Machine equipment;
a processor circuitry (62) configured to obtain at least one operator connection offer for the Machine to Machine equipment (10), each offer originating from a separate operator, and to select one or more of the at least one operator connection offer based on subscription information and the received context information related to the Machine to Machine equipment, and;
a sender circuitry (64) configured to send the selected one or more of the at least one operator connection offer to a decision entity associated with the Machine to Machine equipment (10) for selection of one operator connection offer.

## Patentansprüche

1. Verfahren in einem Netzknoten (14) eines Kommunikationsnetzes zum Senden von Betreiberverbindungsangeboten an eine mit dem Kommunikationsnetz verbindbare Maschine-Maschine-Ausrüstung (10), wobei das Verfahren umfasst:
Empfangen (42) einer Verbindungsanforderung von einer Maschinen-Maschine-Ausrüstung (10), wobei die Verbindungsanforderung ferner Kontextinformation für die Maschine-Maschine-Ausrüstung umfasst;
Erhalten (44) von mindestens einem Betreiberverbindungsangebot für die Maschine-Maschine-Ausrüstung (10), wobei jedes Angebot von einem separaten Betreiber stammt;
Auswählen(46) eines oder mehrerer von dem mindestens einen Betreiberverbindungsangebot basierend auf Abonnementinformation und der empfangenen Kontextinformation, die sich auf die Maschine-Maschine-Ausrüstung bezieht, und
Senden (48) des ausgewählten einen oder der ausgewählten mehreren von dem mindestens einen Betreiberverbindungsangebot an eine der Maschine-zu-Maschine-Ausrüstung (10) zugeordnete Entscheidungseinheit zur Auswahl eines Betreiberverbindungsangebots.

2. Verfahren nach Anspruch 1, wobei das Erhalten (44) umfasst:
Erhalten (44) des mindestens einen Betreiberverbindungsangebots für die Maschine-Maschine-Ausrüstung von mindestens einem von einem Registrierungsknoten, mindestens einem Betreiber oder von einer dem Netzknoten zugeordneten Speichereinheit.

3. Verfahren nach Anspruch 2, wobei ein Betreiberverbindungsangebot direkt oder zeitlich geplant mittels Pull oder Push von dem Registrierungsknoten oder von einem Betreiber erhalten wird.

4. Verfahren nach den Ansprüchen 1 bis 3, wobei das Erhalten (44) ferner umfasst:
Erhalten (44) des mindestens einen Betreiberverbindungsangebots als eine Dienstgütevereinbarung, wobei jede Dienstgütevereinbarung mindestens einen der Parameter Preisgestaltung, Abonnementlaufzeit, Bandbreitenbeschränkungen, Verbindungsqualität, Standortkoordinaten, Dienstverfügbarkeit, Dienstzuverlässigkeit, Sicherheitsanforderungen und -gegebenheiten sowie Schwellenwerte einschließt.

5. Verfahren nach einem der Ansprüche 1 bis 4, wobei der Erhalten (44) ferner umfasst:
Übersetzen des mindestens einen Betreiberverbindungsangebots in ein gemeinsames Format, das durch den Netzknoten verarbeitet werden kann.

6. Verfahren nach einem der vorstehenden Ansprüche, wobei die Entscheidungseinheit eine von einer in der Maschine-Maschine-Ausrüstung enthaltenen Einheit oder einer in dem Kommunikationsnetz enthaltenen Einheit ist.

7. Netzknoten (14), der mit einem Kommunikationsnetz verbindbar ist und eingerichtet ist, um Betreiberverbindungsangebote an eine Maschine-Maschine-Ausrüstung (10) zu senden, die mit dem Kommunikationsnetz verbindbar ist, wobei der Netzknoten umfasst:
eine Empfängerschaltung (60), die konfiguriert ist, um eine Verbindungsanforderung von einer Maschine-Maschine-Ausrüstung (10) zu empfangen, wobei die Verbindungsanforderung ferner Kontextinformation für die Maschine-Maschine-Ausrüstung umfasst;
eine Prozessorschaltung (62), die konfiguriert ist, um mindestens ein Betreiberverbindungsangebot für die Maschine-Maschine-Ausrüstung (10) zu erhalten, wobei jedes Angebot von einem separaten Betreiber stammt, und um eines oder mehrere von dem mindestens einen Betreiberverbindungsangebot basierend auf Abonnementinformation und der empfangenen Kontextinformation, die sich auf die Maschine-Maschine-Ausrüstung bezieht, auszuwählen; und
eine Senderschaltung (64), die konfiguriert ist, um das ausgewählte eine oder die ausgewählten mehreren von dem mindestens einen Betreiberverbindungsangebot an eine der Maschine-Maschine-Ausrüstung (10) zugeordnete Entscheidungseinheit zur Auswahl eines Betreiberverbindungsangebots zu senden.

## Revendications

1. Procédé dans un noeud de réseau (14) d'un réseau de communication pour envoyer des offres de connexion d'opérateur à un équipement de machine à machine (10) pouvant être connecté au réseau de communication, le procédé comprend :
la réception (42) d'une demande de connexion depuis un équipement de machine à machine (10), dans lequel la demande de connexion comprend en outre des informations de contexte pour l'équipement de machine à machine ;
l'obtention (44) d'au moins une offre de connexion d'opérateur pour l'équipement de machine à machine (10), chaque offre provenant d'un opérateur séparé ;
la sélection (46) d'une ou plusieurs parmi l'au moins une offre de connexion d'opérateur, sur la base d'informations d'abonnement et des informations de contexte reçues se rapportant à l'équipement de machine à machine, et
l'envoi (48) de celle ou celles sélectionnées parmi l'au moins une offre de connexion d'opérateur à une entité de décision associée à l'équipement de machine à machine (10) pour sélection d'une offre de connexion d'opérateur.

2. Procédé selon la revendication 1, dans lequel l'obtention (44) comprend :
l'obtention (44) de l'au moins une offre de connexion d'opérateur pour l'équipement de machine à machine depuis au moins l'un parmi un noeud d'inscription, au moins un opérateur ou depuis une unité de stockage associée au noeud de réseau.

3. Procédé selon la revendication 2, dans lequel une offre de connexion d'opérateur est obtenue directement ou planifiée au moyen d'un transfert pull ou push depuis le noeud d'inscription ou depuis un opérateur.

4. Procédé selon la revendication 1 à 3, dans lequel l'obtention (44) comprend en outre :
l'obtention (44) de l'au moins une offre de connexion d'opérateur en tant qu'accord de niveau de service, chaque accord de niveau de service incluant au moins l'un des paramètres parmi tarification, durée d'abonnement, contraintes de largeur de bande, qualité de connexion, coordonnées de localisation, disponibilité de service, fiabilité de service, exigences et considérations de sécurité, et valeurs seuils.

5. Procédé selon l'une quelconque des revendications 1 à 4, dans lequel l'obtention (44) comprend en outre :
la traduction de l'au moins une offre de connexion d'opérateur en un format courant qui peut être traité par le noeud de réseau.

6. Procédé selon l'une quelconque des revendications précédentes, dans lequel l'entité de décision est l'une parmi une entité incluse dans l'équipement de machine à machine ou une entité dans le réseau de communication.

7. Noeud de réseau (14) pouvant être connecté à un réseau de communication, et agencé pour envoyer des offres de connexion d'opérateur à un équipement de machine à machine (10) pouvant être connecté au réseau de communication, le noeud de réseau comprenant :
un circuit récepteur (60) configuré pour recevoir une demande de connexion depuis un équipement de machine à machine (10), dans lequel la demande de connexion comprend en outre des informations de contexte pour l'équipement de machine à machine ;
un circuit processeur (62) configuré pour obtenir au moins une offre de connexion d'opérateur pour l'équipement de machine à machine (10), chaque offre provenant d'un opérateur séparé, et pour sélectionner une ou plusieurs parmi l'au moins une offre de connexion d'opérateur sur la base d'informations d'abonnement et des informations de contexte reçues se rapportant à l'équipement de machine à machine, et ;
un circuit d'envoi (64) configuré pour envoyer celle ou celles sélectionnées parmi l'au moins une offre de connexion d'opérateur à une entité de décision associée à l'équipement de machine à machine (10) pour sélection d'une offre de connexion d'opérateur.
